# EUROPEAN PATENT APPLICATION

(11) **EP 4 517 599 A1**
(43) Date of publication of application: **05.03.2025**
(21) Application number: 24195846.1
(22) Date of filing: 22.08.2024
(51) Int. Cl.: G06N 3/10, G06N 20/00, G06F 16/2457

(54) **INFORMATION PROCESSING APPARATUS, METHOD, AND PROGRAM**

(30) Priority: 29.08.2023 JP 2023139047
(71) Applicant: Kabushiki Kaisha Toshiba, Tokyo 105-0023 (JP)
(72) Inventor: TAKAHASHI, Keita, Minato-ku, Tokyo, 105-0023 (JP); OHIRA, Hidetaka, Minato-ku, Tokyo, 105-0023 (JP); NAKAGAWA, Yukako, Minato-ku, Tokyo, 105-0023 (JP)
(74) Representative: Hoffmann Eitle

(57) **Abstract**

According to one embodiment, an information processing apparatus (10) includes a first acquisition unit (102), a second acquisition unit (103), an analysis unit (104) and a first generation unit (105). The first acquisition unit (102) is configured to acquire quantitative information relating to a machine learning model. The second acquisition unit (103) is configured to acquire user input information input from a user. The analysis unit (104) is configured to select, based on the quantitative information and the user input information, an item to be displayed and a visualizing method from display information definitions that include items relating to evaluation of the machine learning model and visualizing methods of the evaluation. The first generation unit (105) is configured to generate, based on the selected result, display information that includes at least partial content of the quantitative information and the user input information.

## Description

### FIELD

Embodiments described herein relate generally to an information processing apparatus, method, and program.

### BACKGROUND

In the development of AI using machine learning models, it is necessary to appropriately visualize necessary quality information according to the behavior of a trained model that is being tested and a trained model that is being operated as well as the qualitative evaluation results from a user. The quality information relating to machine learning models is very complicated, as compared to conventional software, and includes various kinds of information. Thus, displaying all kinds of information makes it difficult for a user to properly understand necessary information. Also, it is difficult for a person to scrutinize necessary information unless he or she is a specialist possessing advanced knowledge.

Thus, although there is a method in which to display predetermined fixed items as a conventional method of visualizing the quality information of machine learning models, this method has a drawback in that the visualized content cannot be changed dynamically according to the behavior of a machine learning model that is being operated and the results of the qualitative evaluation from a user, making it difficult to understand a correct situation.

### BRIEF DESCRIPTION OF THE DRAWINGS

FIG. 1 is a block diagram showing an information processing apparatus according to a first embodiment.
FIG. 2 is a flowchart showing an example of an operation of the information processing apparatus according to the first embodiment.
FIG. 3 is a table showing a relationship between user attributes and developmental phases.
FIG. 4 is a diagram showing a first example of display information according to the first embodiment.
FIG. 5 is a diagram showing a second example of display information according to the first embodiment.
FIG. 6 is a block diagram showing an information processing apparatus according to a second embodiment.
FIG. 7 is a flowchart showing an example of an operation of the information processing apparatus according to the second embodiment.
FIG. 8 is a diagram showing an example of displaying display information and supplementary information according to the second embodiment.
FIG. 9 is a block diagram showing an information processing apparatus according to a third embodiment.
FIG. 10 is a flowchart showing an example of an operation of the information processing apparatus according to the third embodiment.
FIG. 11 is a flowchart showing an example of an operation of the information processing apparatus for updating a checklist according to the third embodiment.
FIG. 12 is a diagram showing an example of modifying the checklist when a predetermined criterion is satisfied according to the third embodiment.
FIG. 13 is a diagram showing an example of modifying the checklist when a predetermined criterion is not satisfied according to the third embodiment.
FIG. 14 is a block diagram showing an information processing apparatus according to a fourth embodiment.
FIG. 15 is a flowchart showing an example of an operation of the information processing apparatus according to the fourth embodiment.
FIG. 16 is a block diagram showing an information processing apparatus according to a fifth embodiment.
FIG. 17 is a flowchart showing an example of an operation of the information processing apparatus according to the fifth embodiment.
FIG. 18 is a diagram showing an example of displaying a result of comparison according to the fifth embodiment.
FIG. 19 is a diagram showing an example of a hardware configuration of the information processing apparatuses according to the first to fifth embodiments.

### DETAILED DESCRIPTION

In general, according to one embodiment, an information processing apparatus (10) includes a first acquisition unit (102), a second acquisition unit (103), an analysis unit (104) and a first generation unit (105). The first acquisition unit (102) is configured to acquire quantitative information relating to a machine learning model. The second acquisition unit (103) is configured to acquire user input information input from a user. The analysis unit (104) is configured to select, based on the quantitative information and the user input information, an item to be displayed and a visualizing method from display information definitions that include items relating to evaluation of the machine learning model and visualizing methods of the evaluation. The first generation unit (105) is configured to generate, based on the selected result, display information that includes at least partial content of the quantitative information and the user input information.

Hereinafter, an information processing apparatus, method, and non-transitory computer readable medium according to embodiments will be described in detail with reference to the drawings. In the embodiments described below, the parts with the same reference symbols perform the same operations; thus, repetitive descriptions will be omitted as appropriate.

### (First Embodiment)

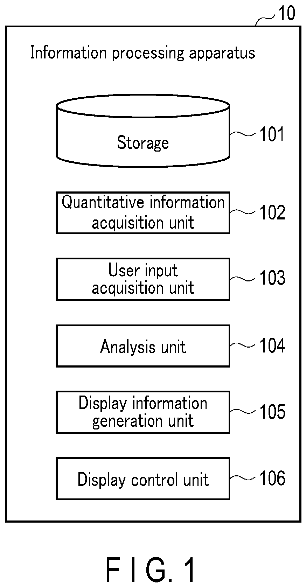

An information processing apparatus according to a first embodiment will be described with reference to the block diagram of FIG. 1.

An information processing apparatus 10 according to the first embodiment includes a storage unit 101, a quantitative information acquisition unit 102, a user input acquisition unit 103, an analysis unit 104, a display information generation unit 105, and a display control unit 106.

The storage unit 101 includes a machine learning model before being trained, a trained model, which is a machine learning model having been trained, training data, display information definitions, and the like. Hereinafter, a model before being trained, a model that is being trained, and a trained model are collectively called a "machine learning model". The machine learning model may have any format as long as it is a general architecture used in machine learning. The display information definitions include items relating to the evaluation of the machine learning model and methods of visualizing the evaluation. Specifically, the display information definitions include multiple items relating to the evaluation of the machine learning model, graph formats for displaying the items, layout information, character information, and the like.

The quantitative information acquisition unit 102 acquires quantitative information relating to a model. The quantitative information is a quantitative value for evaluating a trained model, such as an accuracy rate, an adaptation rate, a reproduction rate, and an AUC (area under the ROC curve) of the trained model. The quantitative information is not limited to numerical values and includes a pattern obtained by visualizing and shaping a quantitative value into a graph or a table.

The user input acquisition unit 103 acquires user input information input from a user. The user input information is, for example, information manually input into a checklist.

The analysis unit 104 performs analysis based on the quantitative information and the user input information and selects an item to be displayed and a visualizing method from the display information definitions.

The display information generation unit 105 generates, based on a result of the selection made by the analysis unit 104, display information that includes at least partial content of the quantitative information and the user input information.

The display control unit 106 causes the display information to be displayed, for example, on a display.

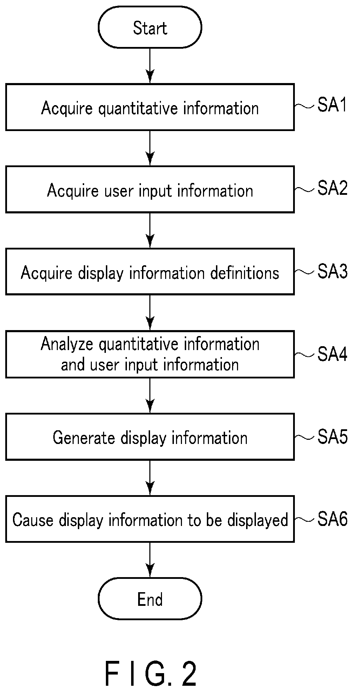

Next, a first example of an operation of the information processing apparatus 10 according to the first embodiment will be described with reference to the flowchart of FIG. 2.

In step SA1, the quantitative information acquisition unit 102 acquires quantitative information. Specifically, the quantitative information acquisition unit 102 may acquire output such as an accuracy rate, an adaptation rate, and the like of a trained model that are generated in a machine learning development platform.

In step SA2, the user input acquisition unit 103 acquires user input. Specifically, the user input may be acquired by preparing, for example, a checklist of questions made using an existing spreadsheet in advance and having a user put checkmarks by the questions on the checklist or enter information in a column for free description. The information input manually or through voice as the answers to the questions from the system side may also be acquired as user input. In addition, the checklist may include columns of questions and categories on which the user can put checkmarks or enter information, whereby information relating to a category may also be included in the information provided by a user.

In step SA3, the analysis unit 104 acquires display information definitions stored, for example, in the storage unit 101.

In step SA4, the analysis unit 104 analyzes the quantitative information acquired in step SA1 and the user input acquired in step SA2, and selects an item to be displayed from the display information definitions acquired in step SA3. The criterion for the selection of an item to be displayed may be, for example, the degree of importance of the information. Specifically, a goal to be achieved and a borderline that must not be transcended are entered, so that the entered goal to be achieved or borderline is acquired as user input. The analysis unit 104 analyzes the quantitative information based on the user input. For example, if an accuracy rate of 90% is input as a goal to be achieved, it is determined whether or not the accuracy rate reaches 90% in the quantitative information. If the accuracy rate does not reach 90%, an item may be selected and modified so as to increase its degree of importance and be highlighted in the display information.

Alternatively, if a numerical value obtained in the quantitative information for a certain item is different from or inconsistent with a numerical value obtained via user input for the item, there is a high need to inform users thereof; thus, an item may be selected and modified such that the degree of importance of the item is set higher than the degrees of importance of the other items.

The degree of importance of each item may be set in advance as a default. For example, the degrees of importance according to user attributes may be defined for each question in a hidden column of a tabular-form checklist made using a spreadsheet, and set as a default for the analysis process. That is, if an entry into the checklist is made, the degrees of importance of the items in the display information definitions may be analyzed based on the initial values of the degrees of importance of the user attributes corresponding to the checklist, and an item may be selected from among the multiple items in the display information definitions and modified.

In step SA5, the display information generation unit 105 generates, based on a result of the selection performed in step SA4, display information that includes evaluation information relating to the quantitative information and information on the user input. Examples of the display information include HTML (HyperText Markup Language), Markdown, a Word (registered trademark) file, a PowerPoint (registered trademark) file, and a PDF file, and a user may create the display information in a general format.

In step SA6, the display control unit 106 causes the display information to be displayed on a display or the like. Thus, display information comprehensively including information with a high degree of importance for a specific user can be displayed.

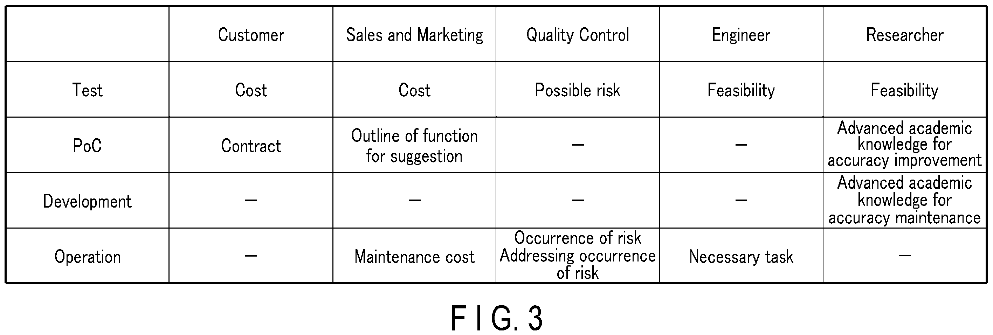

Next, a relationship between user attributes and developmental phases, which serves as a barometer for the setting of the degree of importance, will be explained with reference to the table shown in FIG. 3.

The table shown in FIG. 3 presents items that are considered to be important in the combinations of the user attribute types and the developmental phases. That is, an item to be displayed is based on in which developmental phase of which user the degree of importance is set high. Specifically, if the user attribute is "engineer" and the developmental phase is "test", the analysis unit 104 may set the degree of importance of an item relating to the "feasibility" of a model to be higher than the degrees of importance of the other items, and the display information generation unit 105 may generate display information including the item relating to the "feasibility".

Either the user attributes or the developmental phases may be taken into consideration instead of both the user attributes and the developmental phases. That is, the degree of importance of an item may be determined for each user attribute such as "customer" and "sales and marketing", and the degree of importance of an item may be determined for each developmental phase such as "PoC" and "development".

Further, a method of determining the degree of importance may be defined in a personalized manner in personal units such as "user A" and "user B".

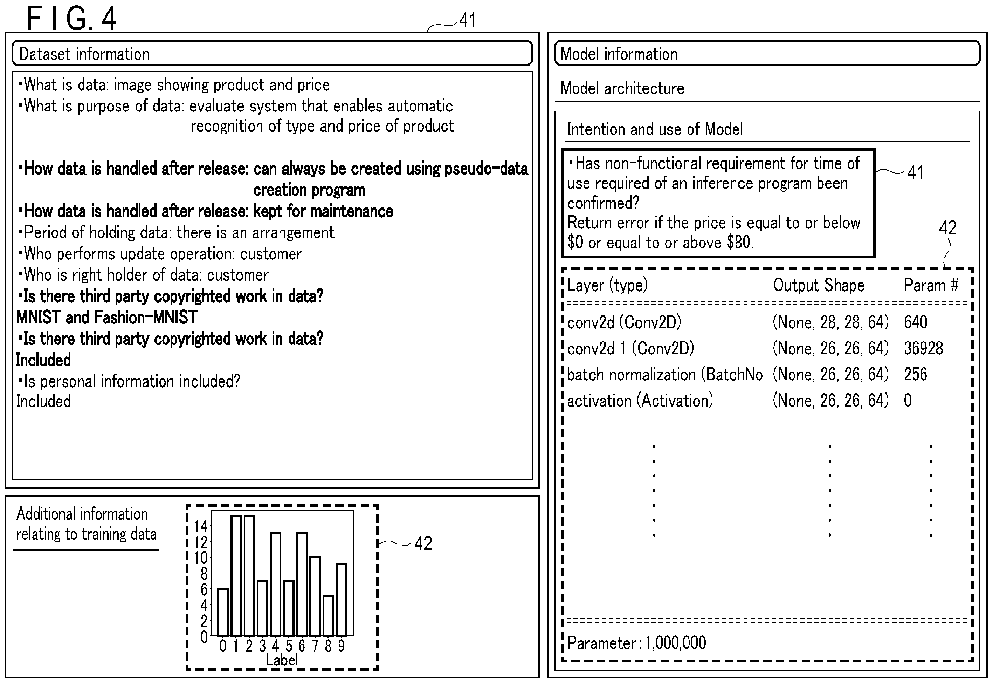

Next, a first example of the display information according to the first embodiment will be described with reference to FIG. 4.

The example shown in FIG. 4 is an example of the display information created on the assumption of a user with no deep specialized knowledge. In this example, "dataset information" relating to a dataset, "model information" relating to a machine learning model, and "additional information" relating to training data are displayed.

The dataset information shows only the information necessary as an item to be displayed, that is, only the information with a high degree of importance that has a degree of importance equal to or above a threshold, for example, and does not show unnecessary information with a low degree of importance that has a degree of importance less than a threshold. Also, an item is displayed in a highlighted manner with character decoration by, for example, showing the information with a degree of importance equal to or above a threshold in boldface or showing it in blue or red. The display in a highlighted manner may be any form of display such as blinking or highlighting as long as it can distinguish an item from the other items.

The model information includes, for example, a model architecture such as a block structure and the number of parameters, a result of inference made by a model, and information on the intention and use of a model obtained from user input information. The additional information includes, for example, a label distribution of the training data.

In this example, the display information shown in FIG. 4 combines the information based on user input information 41 and the information based on quantitative information 42. Thus, it is possible to also display the qualitative evaluation made by a user in addition to the quantitative evaluation of the machine learning model and it is possible to visualize optimal AI quality.

Needless to say, the display information is not limited to the example shown in FIG. 4, and the layout, the illustration method, etc., may be arranged in any manner. The display information may also be shown in a part of a screen that is easy to see.

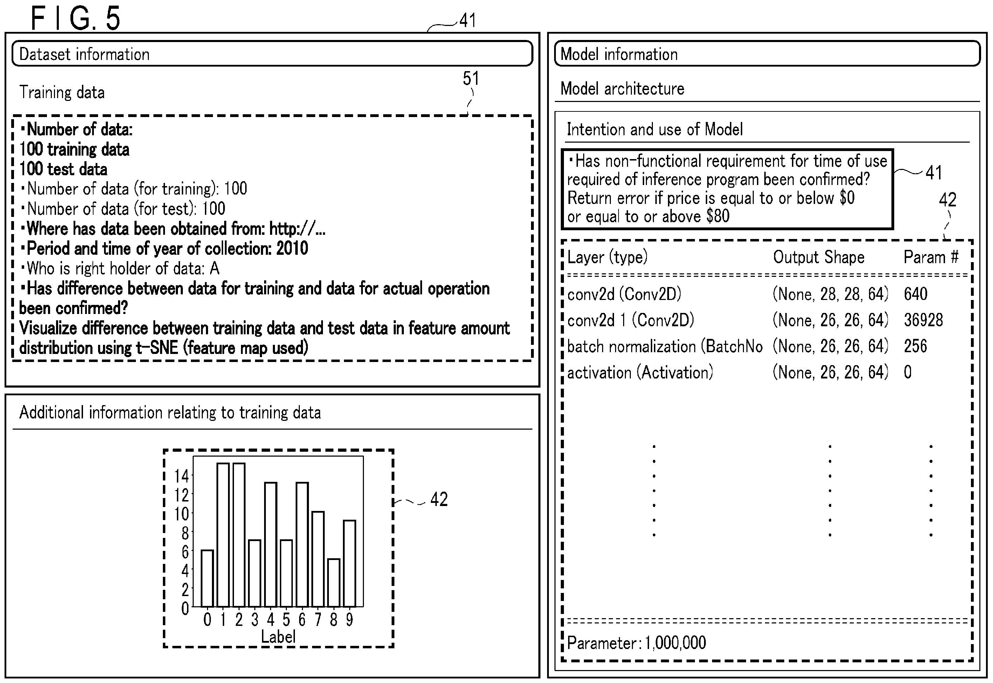

Next, a second example of the display information according to the first embodiment will be described with reference to FIG. 5.

The example shown in FIG. 5 is an example of the display information created on the assumption of a user with deep specialized knowledge. This example differs from the example shown in FIG. 4 in the user input information 51 relating to the dataset information. The information having a degree of importance equal to or above a threshold is displayed in a highlighted manner or, in this example, displayed in boldface. If the analysis unit 104 analyzes that the user who has made an entry into the checklist or the like is an "engineer" having specialized knowledge, information useful to the user as an "engineer", such as the number of pieces of training data and the visualization using t-SNE, can be presented.

According to the first embodiment described above, it is possible to present information necessary for the quality evaluation of a trained model while covering necessary information according to the user type and the developmental phase by analyzing the quantitative information and the user input information, selecting necessary information from the display information definitions, and modifying it to use it as display information, enabling support of appropriate visualization of the quality evaluation.

### (Second Embodiment)

A second embodiment differs from the embodiment described above in that the information not displayed as display information is displayed as supplementary information.

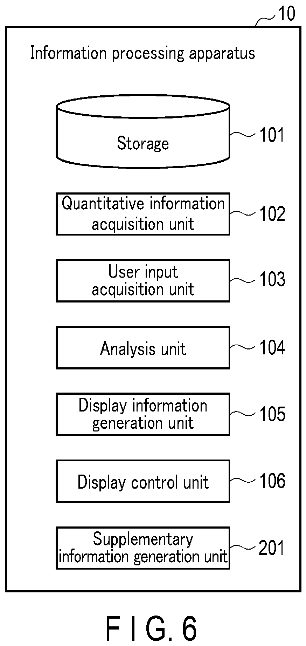

The information processing apparatus 10 according to the second embodiment will be described with reference to the block diagram of FIG. 6.

The information processing apparatus 10 according to the second embodiment includes the storage unit 101, the quantitative information acquisition unit 102, the user input acquisition unit 103, the analysis unit 104, the display information generation unit 105, the display control unit 106, and a supplementary information generation unit 201.

Based on the display information generated by the display information generation unit 105, the supplementary information generation unit 201 collects the items not included in the display information and generates supplementary information.

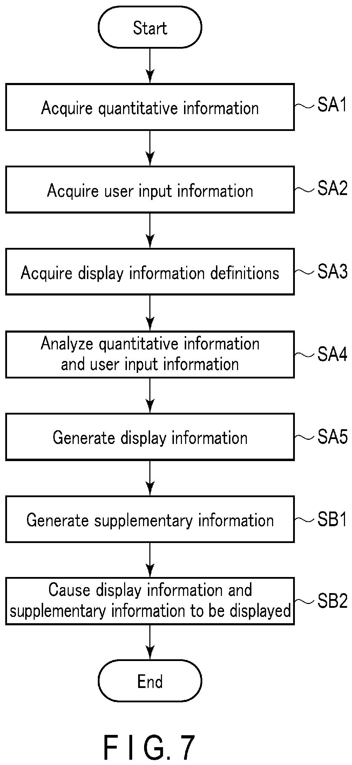

Next, an operation of the information processing apparatus 10 according to the second embodiment will be described with reference to the flowchart of FIG. 7.

Steps SA1 to SA5 are the same as those shown in FIG. 2.

In step SB1, the supplementary information generation unit 201 generates supplementary information to supplement information that is not displayed due to the modification of the display information definitions in step SA5. The supplementary information may be generated by, for example, collecting (e.g., listing) the information on the items determined to be hidden by the modification of the display information definitions.

In step SB2, the display control unit 106 causes the display information and the supplementary information to be displayed on a display or the like.

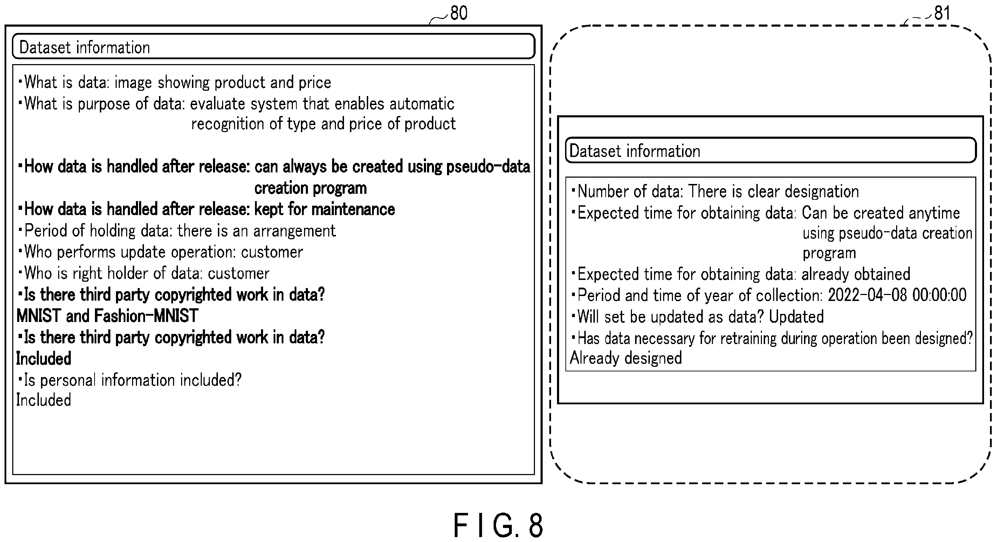

An example of displaying the display information and the supplementary information according to the second embodiment will be described with reference to FIG. 8.

In the example shown in FIG. 8, supplementary information 81 is displayed in addition to display information 80. This example assumes a case where the display information 80 and the supplementary information 81 are displayed in parallel with each other; however, the supplementary information 81 may be displayed on a screen after there is an instruction for display from a user. That is, a button for displaying the supplementary information may be prepared in an area of the display information, and the supplementary information 81 may be displayed when a user clicks the button or a specific button of a keyboard assigned with a function is pressed.

According to the second embodiment described above, the information not displayed due to the selection of an item from the display information definitions is collectively displayed as supplementary information. Thus, it is possible to support appropriate visualization of the quality evaluation, and even if the information desired by a user is hidden due to the analysis performed by the analysis unit, the supplementary information allows the user to check necessary information.

### (Third Embodiment)

A third embodiment differs from the embodiments described above in that if there is an item of the user input information that should be modified, feedback is given to the user so that the user can modify the item.

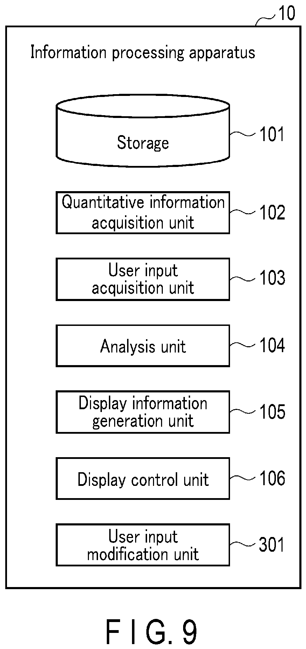

The information processing apparatus 10 according to the third embodiment will be described with reference to the block diagram of FIG. 9.

The information processing apparatus 10 includes the storage unit 101, the quantitative information acquisition unit 102, the user input acquisition unit 103, the analysis unit 104, the display information generation unit 105, the display control unit 106, and a user input modification unit 301.

The user input modification unit 301 modifies the user input information based on the analysis process performed by the analysis unit 104.

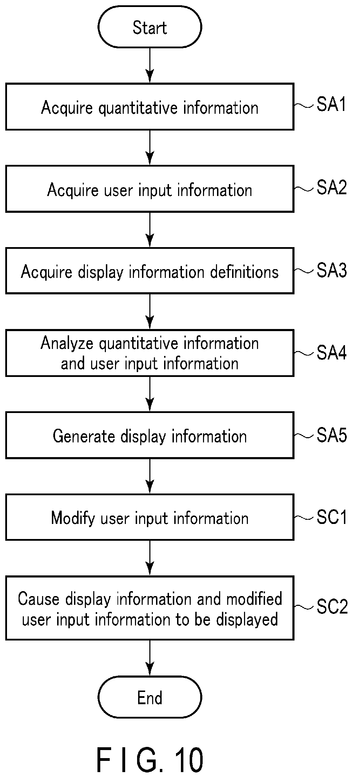

Next, an example of an operation of the information processing apparatus 10 according to the third embodiment will be described with reference to the flowchart of FIG. 10.

Steps SA1 to SA5 are the same as those described above.

In step SC1, the user input modification unit 301 modifies the user input information according to the analysis made based on the quantitative information and the user input information. For example, this example assumes a case where a tabular-form checklist is used to acquire information manually provided from a user. If an accuracy rate of a trained model is indicated as "A%" on the checklist but an accuracy rate of a machine learning model based on the quantitative information is "B%", it is considered that a user has made improper input.

Thus, the user input modification unit 301 rewrites the item of the accuracy rate on the checklist from A% to B%. If the rewriting process is performed, the rewritten item may be highlighted in such a manner as to enable a user to easily know which part has been modified when a user uses the checklist from the next time onward by, for example, displaying the rewritten item in red on the checklist.

In step SC2, the display control unit 106 causes the display information and the modified user input information to be displayed on a display or the like.

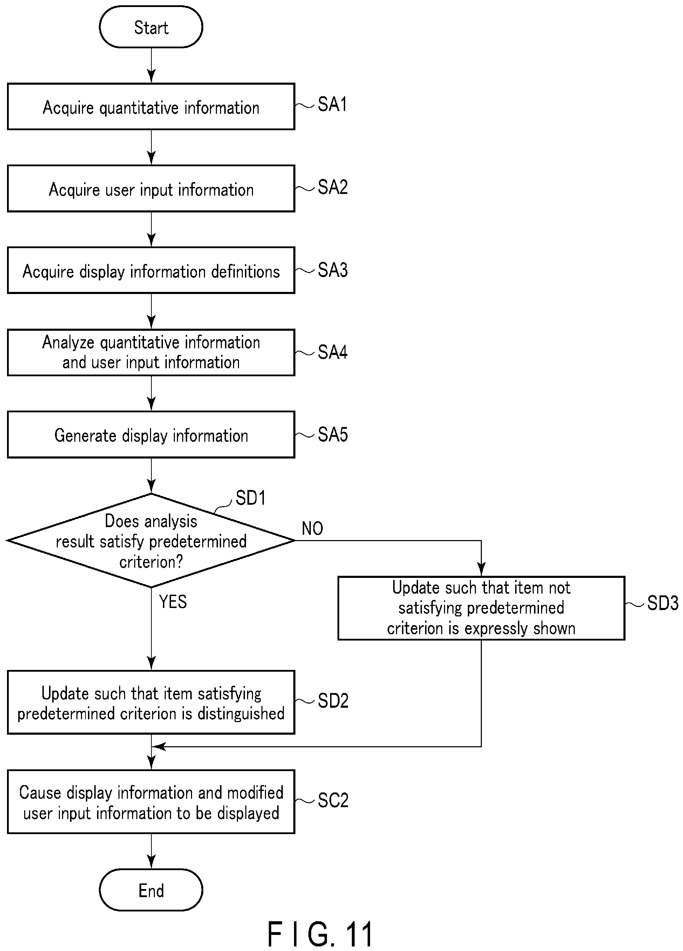

The user input modification unit 301 may update the checklist along with the analysis of the quantitative information and the user input information. An example of an operation of the information processing apparatus 10 for updating the checklist will be described with reference to the flowchart of FIG. 11.

Steps SA1 to SA5 are the same as those described above.

In step SD1, the user input modification unit 301 determines whether or not a result of the analysis of the user input information made by the analysis unit 104 satisfies a predetermined criterion. For example, if "MNIST" is input for an input item of "what was used as a dataset", and the dataset information is also "MNIST" in the quantitative information, it is considered that correct information is input; thus, in this case, it may be determined that the result of the analysis satisfies a predetermined criterion. If the result of the analysis satisfies a predetermined criterion, the process proceeds to step SD2, and if the result of the analysis does not satisfy a predetermined criterion, the process proceeds to step SD3.

In step SD2, the user input modification unit 301 updates the checklist relating to user input such that an item satisfying a predetermined criterion is distinguished. The distinction can be made in the following way: in the above example of "MNIST", for example, display in a distinguishable manner so that input to the item satisfying a predetermined criterion is unnecessary when an entry is made into the checklist from the next time onward. Alternatively, if the item to which input is unnecessary this time satisfies a criterion for being changed to an item to which input is necessary the next time, display in a distinguishable manner so as to indicate that input to the item is necessary. In this manner, the user input modification unit 301 may modify the necessity of user input to an item on the checklist.

In step SD3, the user input modification unit 301 updates the checklist relating to user input such that an item not satisfying a predetermined criterion is expressly shown. The process then proceeds to step SC2, and the display information and the modified user input information are displayed.

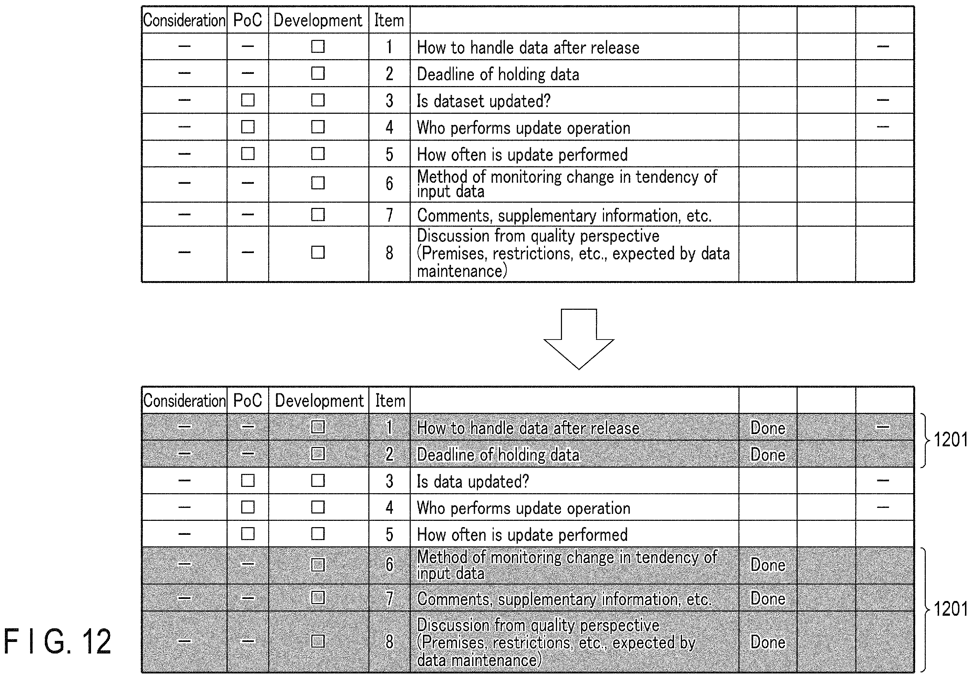

Next, an example of modifying the checklist in step SD2 when a predetermined criterion is satisfied will be described with reference to FIG. 12.

The upper figure of FIG. 12 is a checklist before being modified by the user input modification unit 301, and on this checklist, input to all the items is required. The lower figure of FIG. 12 is a checklist that has been updated (modified) by the user input modification unit 301, and assumes a case where there are items satisfying a predetermined criterion. In this figure, the items satisfying a predetermined criterion are displayed in the form of grayout 1201 and treated as items to which input is unnecessary. On the other hand, the checklist may be updated such that input can be made to only the item(s) to which input is necessary. A user can know, at a glance, to which item input should be made.

Let us assume, for example, a checklist in which the items to which input is made differ according to the developmental phases. Specifically, in the example shown in FIG. 12, if the developmental phase is "PoC", three items, item 3 to item 5, that is, "Item 3: Whether dataset is updated", "Item 4: Who performs update operation" and "Item 5: How often update is performed", are the items to which input is made. On the other hand, if the developmental phase is "development", eight items, item 1 to item 8, are the items to which input is made. As shown in FIG. 12, the user input modification unit 301 updates the checklist such that, in the next developmental phase, input is unnecessary to the item for which it is determined that necessary information has been entered in the current developmental phase. Thus, the burden of consideration and input on a user can be reduced.

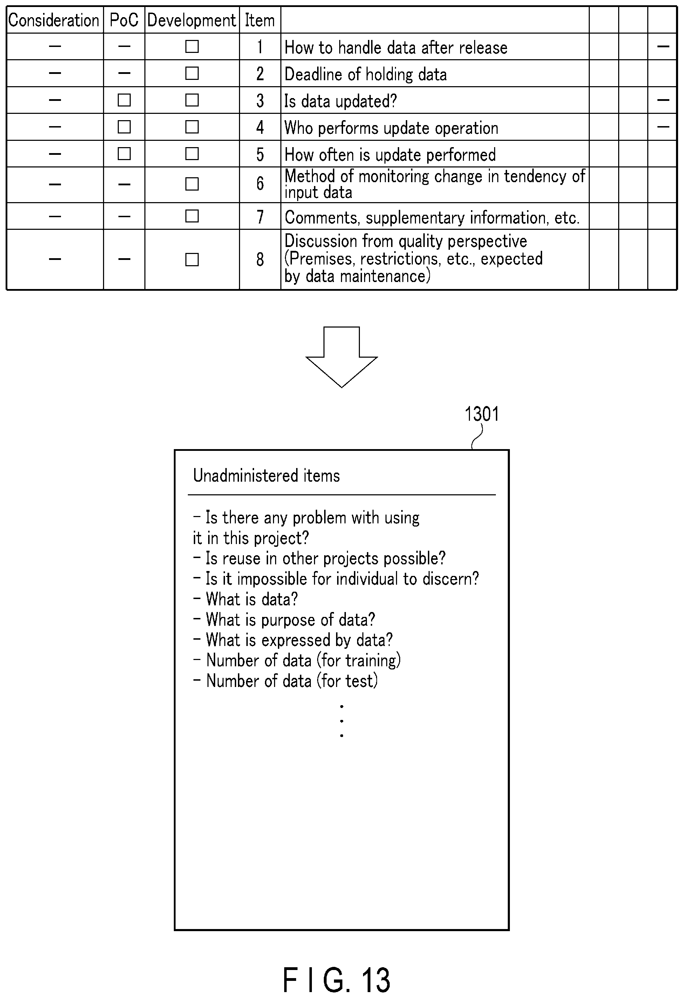

Next, an example of modifying the checklist in step SD3 when a predetermined criterion is not satisfied will be described with reference to FIG. 13.

The upper figure of FIG. 13 is a checklist before being modified by the user input modification unit 301, and assumes that input to all the items is required, as in the case of the upper figure of FIG. 12. The lower figure of FIG. 13 is a checklist that has been updated (modified) by the user input modification unit 301. This is an example of a case where there is an item not satisfying a predetermined criterion, and the user input modification unit 301 extracts and displays the items to which input is necessary as unadministered items in a list 1301. Needless to say, on the checklist, the user input modification unit 301 may use highlighting when displaying the items to which input is necessary, or display them in red, for example, to highlight them, or present a message saying "The criterion is not satisfied; please check."

According to the third embodiment described above, the user input modification unit can feed back information to a user by modifying the user information according to the result of the analysis made by the analysis unit. In addition, if there is an item satisfying a predetermined criterion based on the result of the analysis made by the analysis unit, the user input modification unit updates the checklist relating to user input such that input to said item is unnecessary when the checklist is used from the next time onward. On the other hand, if there is an item not satisfying a predetermined criterion, the user input modification unit updates the checklist relating to user input such that said item is expressly shown. Thus, it is possible to provide feedback of correct information to a user and simplified input from the next time onward while supporting appropriate visualization of the quality evaluation, thus reducing the user's time and effort.

### (Fourth Embodiment)

A fourth embodiment differs from the embodiments described above in that a user is prompted to confirm the information that needs to be confirmed by the user.

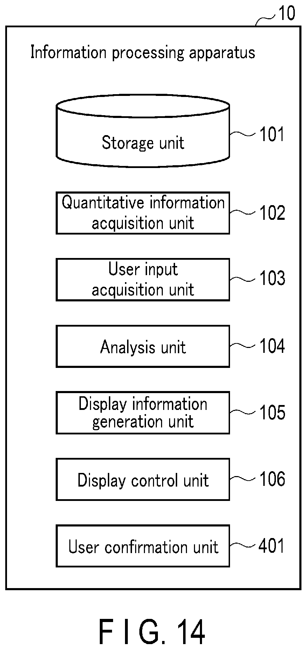

The information processing apparatus 10 according to the fourth embodiment will be described with reference to the block diagram of FIG. 14. The information processing apparatus 10 includes the storage unit 101, the quantitative information acquisition unit 102, the user input acquisition unit 103, the analysis unit 104, the display information generation unit 105, the display control unit 106, and a user confirmation unit 401.

The analysis unit 104 analyzes the quantitative information and the user input information and determines whether or not there is information that needs to be confirmed by a user.

The user confirmation unit 401 presents a user with the information determined to require confirmation by the user based on the analysis made by the analysis unit 104, and acquires feedback from the user.

The display information generation unit 105 generates display information including the feedback from the user.

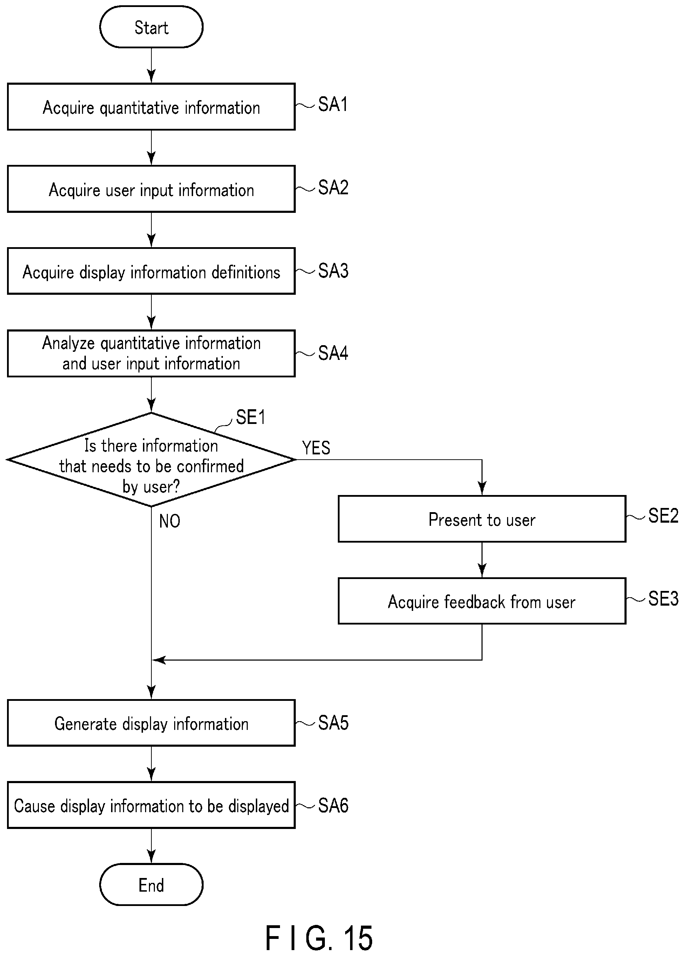

Next, an operation of the information processing apparatus 10 according to the fourth embodiment will be described with reference to the flowchart of FIG. 15.

Steps SA1 to SA4 and Step SA6 are the same as those described above.

In step SE1, as a result of analyzing information based on the quantitative information, the user input information, and the display information definitions, the analysis unit 104 determines whether or not there is information that needs to be confirmed by a user. The information that needs to be confirmed by a user is, for example, information on t-SNE, and it is difficult to determine, using an information processing apparatus, that "there is no difference between training data and actual operation data" from the state of the distribution of t-SNE. Thus, the information that needs to be confirmed by a user is information for which it is difficult to make determination using an apparatus or information for which the determination can be made with higher accuracy and in a shorter time if the determination is made by a user than if the determination is made by an apparatus. Items relating to the information that needs to be confirmed by a user may be listed in advance, and it may be determined that there is information that needs to be confirmed by a user if an item included in the list is selected as an item included in the display information as a result of the analysis made by the analysis unit 104.

If there is information that needs to be confirmed by a user as an item included in the display information, the process proceeds to step SE2, and if there is no information that should be confirmed by a user as an item included in the display information, the process proceeds to step SAS.

In step SE2, the user confirmation unit 401 causes the information that needs to be confirmed by a user to be displayed on a display or the like via the display control unit 106. The confirmation with a user may be performed in the following way: diagrammatically show the information and receive input in Yes/No format indicating whether there is no contradiction in the content of the figure or the description in a sentence or the like that explains the content of the figure.

In step SE3, the user confirmation unit 401 acquires feedback from the user on the information that needs to be confirmed by the user. Specifically, if the input is in Yes/No format, as described above, input presenting "Yes" or "No" may be received from the user. Also, the user confirmation unit 401 may acquire feedback in a free-description format in addition to the input presenting "Yes" or "No" from the user.

In step SA5, if the user confirmation unit 401 receives input of "Yes", it is assumed that there is no problem in the content of the item, so that the display information generation unit 105 may generate display information using the content of the item as is. On the other hand, if the user confirmation unit 401 receives input of "No", modified information after feedback may be displayed or highlighted display information may be generated so as to make it possible to know that there is a problem in the information.

According to the fourth embodiment described above, it is determined whether or not there is information that needs to be confirmed by a user as an item of the display information based on the quantitative information and the user input information, and if there is information that needs to be confirmed by a user, feedback on the information from the user is acquired. Thereafter, display information reflecting the content of the feedback is generated.

Thus, it is possible to provide appropriate model quality evaluation that reflects feedback from a user while supporting appropriate visualization of the quality evaluation.

### (Fifth Embodiment)

A fifth embodiment differs from the embodiments described above in that the generated display information is compared with the past information.

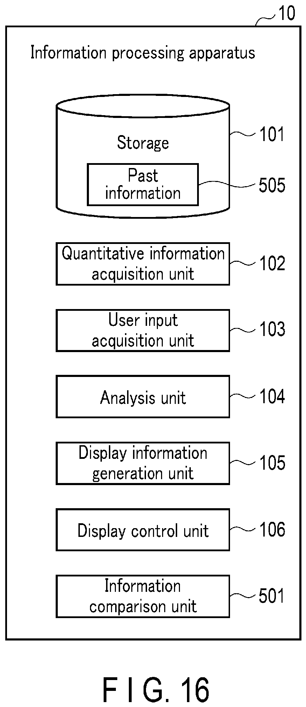

The information processing apparatus 10 according to the fifth embodiment will be described with reference to the block diagram of FIG. 16.

The information processing apparatus 10 includes the storage unit 101, the quantitative information acquisition unit 102, the user input acquisition unit 103, the analysis unit 104, the display information generation unit 105, the display control unit 106, and an information comparison unit 501.

The storage unit 101 stores multiple pieces of past information 505, which are display information generated in the past. For the past information 505, display information may be stored in the storage unit 101 every time the display information generation unit 105 generates the display information.

The information comparison unit 501 compares display information with the past information 505 stored in the storage unit 101 and generates a result of the comparison.

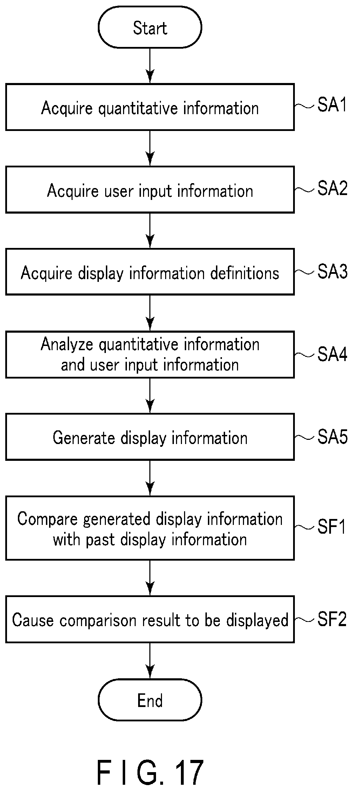

Next, an operation of the information processing apparatus 10 according to the fifth embodiment will be described with reference to the flowchart of FIG. 17.

Steps SA1 to SA5 are the same as those described above.

In step SF1, the information comparison unit 501 compares the display information generated in step SA5 and the past information 505 stored in the storage unit 101. For example, based on the search conditions input from a user, a search is made for the past information that matches the display information generated in step SA5 in terms of the items. The information comparison unit 501 may set default search conditions in advance according to the data type, the task of a machine learning model, etc., and the past information whose items match the generated display information may be extracted according to the default search conditions. Alternatively, the search need not necessarily be made based on search conditions; past information may be extracted that has a similarity between the display information and the past information in the items or content equal to or above a threshold.

In step SF2, the display control unit 106 causes the result of the comparison (search result) obtained in step SF1 to be displayed on a display or the like together with the display information.

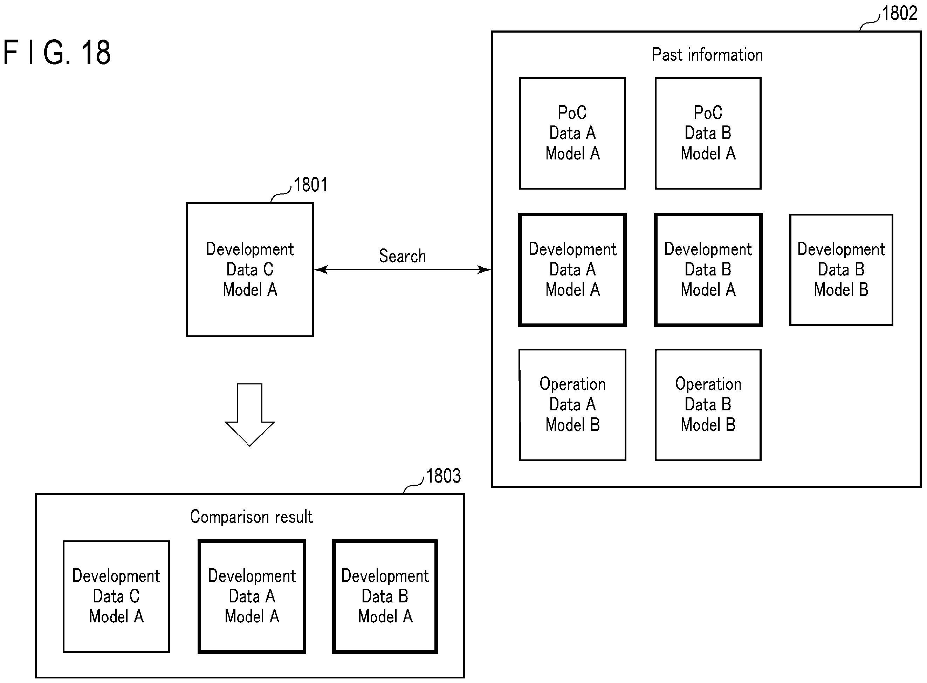

Next, an example of the result of the comparison according to the fifth embodiment will be described with reference to FIG. 18.

FIG. 18 is a conceptual diagram showing an example of a method of generating a result of the comparison. The information comparison unit 501 searches for past information 1802 using one or more items of generated display information 1801 as search conditions. In this example, it is assumed that, specifically, a model type "model A" is trained using a data type "data C" in a developmental phase "development" and the display information 1801 ("development/data C/model A") is generated. If the search conditions are "development" as a developmental phase and "model A" as a model type, "development/data A/model A" and "development/data B/model A" are extracted as corresponding past information 1802 by the information comparison unit 501.

Finally, as a comparison result 1803, display information 1801 "development/data C/model A" and two pieces of past information 1802 "development/data A/model A" and "development/data B/model A" are displayed in parallel with each other so that they can be compared with each other. In the comparison result 1803, parts common or different between the display information 1801 and the past information 1802 may be highlighted.

If the past information 1802 is stored in the storage unit 101, a tag relating to an item or a keyword may be stored in association with the past information 1802. For example, a developmental phase (e.g., development, PoC), model performance (e.g., an accuracy rate, an F value), applied data, an applied algorithm, etc., as tags are associated with the display information. In the subsequent analysis, the past information for comparison may be searched for and extracted based on the tag. A user may freely determine which tag is to be used for making the comparison, or the information comparison unit 501 may automatically select a tag based on the past result of the comparison and the items of the generated display information to be compared.

According to the fifth embodiment described above, display information generated in the past is stored as past information in the storage unit, and the information comparison unit searches for past information having an item common to the display information and displays the display information and the past information in parallel with each other as a comparison result.

Thus, it is possible to efficiently support users' determinations based on the display information and the past information, such as what difference in the model performance is brought about by the items that the user desires to compare, for example, by the difference in the training data, while supporting appropriate visualization of the quality evaluation.

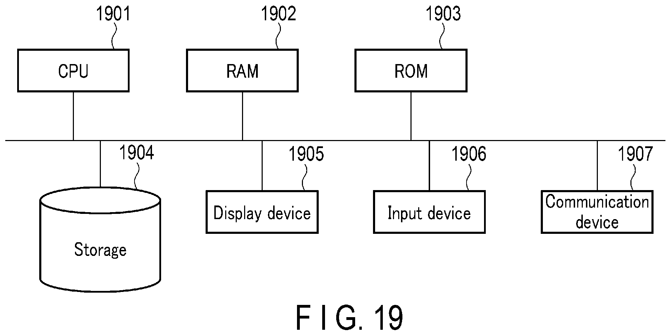

Next, an example of a hardware configuration of the information processing apparatus 10 according to the first to fifth embodiments described above will be explained with reference to the diagram of FIG. 19.

The information processing apparatus 10 includes a central processing unit (CPU) 1901, a random access memory (RAM) 1902, a read only memory (ROM) 1903, a storage 1904, a display 1905, an input device 1906, and a communication device 1907, all of which are connected via a bus.

The CPU 1901 is a processor that executes arithmetic processing and control processing according to one or more programs. The CPU 1901 uses a predetermined area in the RAM 1902 as a work area to perform the processing of each component of the information processing apparatus 10 described above in cooperation with one or more programs stored in the ROM 1903, the storage 1904, etc. The respective types of processing of the information processing apparatus 10 may be performed by one processor or dispersed and performed by multiple processors.

The RAM 1902 is a memory such as a synchronous dynamic random access memory (SDRAM). The RAM 1902 functions as a work area of the CPU 1901. The ROM 1903 is a memory for storing programs and various types of information in a manner that does not permit rewriting.

The storage 1904 is a device that writes and reads data to and from a magnetic recording medium, such as a hard disc drive (HDD), a semiconductor storage medium, such as a flash memory, a magnetically recordable storage medium, such as an HDD, or an optically recordable storage medium. The storage 1904 writes and reads data to and from a storage medium under the control of the CPU 1901.

The display 1905 is a display device such as a liquid crystal display (LCD). The display 1905 displays various types of information based on a display signal from the CPU 1901.

The input device 1906 is an input device such as a mouse and a keyboard. The input device 1906 receives information input by the user as an instruction signal, and outputs the instruction signal to the CPU 1901.

The communication device 1907 communicates with external devices via a network under the control of the CPU 1901.

The instructions indicated in the process steps described in the above embodiments can be implemented based on a software program. It is also possible to achieve the same effects as those provided by the control operation executed by the information processing apparatus described above by having a general-purpose computer system store the program in advance and read the program. The instructions described in the above embodiments are stored, as a program executable by a computer, in a magnetic disk (flexible disk, hard disk, etc.), an optical disk (CD-ROM, CD-R, CD-RW, DVD-ROM, DVD±R, DVD±RW, Blu-ray (registered trademark) disk, etc.), a semiconductor memory, or a similar storage medium. The storage medium here may utilize any storage technique provided that the storage medium can be read by a computer or by a built-in system. The computer can realize the same operation as the control of the information processing apparatus according to the above embodiment by reading the program from the storage medium and, based on this program, causing the CPU to execute the instructions described in the program. The computer may, of course, acquire or read the program through a network.

Also, an operating system (OS) working on a computer, database management software, middleware (MW) of a network, etc., may execute a part of the processing for realizing the embodiment based on the instructions of a program installed from a storage medium onto a computer and a built-in system.

Furthermore, the storage medium according to the embodiment is not limited to a medium independent from a computer or a built-in system, and may include a storage medium storing or temporarily storing a program downloaded through a LAN or the Internet, etc.

In addition, the number of storage media is not limited to one. The embodiments include the case where the process is executed using a plurality of storage media, and the storage media can take any configuration.

The computer or built-in system in the embodiments is used to execute each processing in the embodiments, based on a program stored in a storage medium, and the computer or built-in system may be an apparatus consisting of a PC, a microcomputer or the like, or may be a system or the like in which a plurality of apparatuses are connected through a network.

The computer adopted in the embodiments is not limited to a PC; it may be an arithmetic processing apparatus, a microcomputer, or the like included in an information processor, and a device and apparatus that can realize the functions of the embodiments with a program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing apparatus (10), comprising:
a first acquisition unit (102) configured to acquire quantitative information relating to a machine learning model;
a second acquisition unit (103) configured to acquire user input information input from a user;
an analysis unit (104) configured to select, based on the quantitative information and the user input information, an item to be displayed and a visualizing method from display information definitions that include items relating to evaluation of the machine learning model and visualizing methods of the evaluation; and
a first generation unit (105) configured to generate, based on the selected result, display information that includes at least partial content of the quantitative information and the user input information.

2. The apparatus (10) according to claim 1, wherein the analysis unit (104) sets a degree of importance of the items included in the display information definitions according to attribute information of the user and a developmental phase in which the machine learning model for which the quantitative information is obtained is used.

3. The apparatus (10) according to claim 1 or claim 2, further comprising a second generation unit (201) configured to generate, as supplementary information, an item not included in the display information.

4. The apparatus (10) according to any one of claims 1 to 3, further comprising:
a modification unit (301) configured to modify the user input information if the user input information needs to be modified as a result of an analysis based on the quantitative information and the user input information; and
a display control unit (106) configured to cause the modified user input information to be displayed to the user.

5. The apparatus (10) according to any one of claims 1 to 3, further comprising a modification unit (301) configured to modify a necessity of user input to an item on a checklist for acquiring the user input information according to a phase in which the checklist is used next if it is determined that a result of an analysis based on the quantitative information and the user input information satisfies a predetermined criterion.

6. The apparatus (10) according to any one of claims 1 to 3, further comprising a modification unit (301) configured to, if there is a first item determined to fail to satisfy a predetermined criterion as a result of an analysis based on the quantitative information and the user input information, extract the first item from a checklist for acquiring the user input information or highlight the first item on the checklist.

7. The apparatus (10) according to any one of claims 1 to 6, further comprising a user confirmation unit (401), wherein
the analysis unit (104) determines, based on the quantitative information and the user input information, whether or not there is first information that needs to be confirmed by the user;
the user confirmation unit (401) presents the information to the user if there is the first information; and acquires feedback from the user.

8. The apparatus (10) according to claim 1, further comprising
a comparison unit (501) configured to extract, from multiple pieces of past information, past information that matches a search condition based on newly generated display information, the multiple pieces of past information being display information generated in a past; and
a display control unit (106) configured to cause the extracted past information and the display information to be displayed to the user as a result of comparison.

9. An information processing method, comprising:
acquiring quantitative information relating to a machine learning model;
acquiring user input information input from a user;
selecting, based on the quantitative information and the user input information, an item to be displayed and a visualizing method from display information definitions that include items relating to evaluation of the machine learning model and visualizing methods of the evaluation; and
generating, based on the selected result, display information that includes at least partial content of the quantitative information and the user input information.

10. An information processing program including computer executable instructions, wherein the instructions, when executed by a processor, cause the processor to perform a method comprising:
acquiring quantitative information relating to a machine learning model;
acquiring user input information input from a user;
selecting, based on the quantitative information and the user input information, an item to be displayed and a visualizing method from display information definitions that include items relating to evaluation of the machine learning model and visualizing methods of the evaluation; and
generating, based on the selected result, display information that includes at least partial content of the quantitative information and the user input information.
